# EUROPEAN PATENT SPECIFICATION

(11) **EP 0 339 755 B1**
(45) Date of publication and mention of the grant of the patent: **05.05.1993**
(21) Application number: 89201489.5
(22) Date of filing: 10.02.1986
(51) Int. Cl.: H04N 5/14

(54) **Video signal processing circuit**
Videosignalverarbeitungsschaltung
Circuit de traitement d'un signal vidéo

(30) Priority: 08.01.1986 NL 8600019
(43) Date of publication of application: 02.11.1989
(62) Divisional of application: 86200172.4
(73) Proprietor: Philips Electronics N.V., 5621 BA Eindhoven (NL)
(72) Inventor: Annegarn, Marcellinus Joseph Johannes Cornelius, NL-5656 AA Eindhoven (NL); Doyle, Terence, NL-5656 AA Eindhoven (NL); Frencken, Peter Hubertus, NL-5656 AA Eindhoven (NL); Van Hees, Dirk Antonie, NL-5656 AA Eindhoven (NL)
(74) Representative: Kooiman, Josephus Johannes Antonius

(56) References cited:
- US-A- 4 213 150

## Description

The invention relates to a video signal processing circuit having video signal inputs coupled to a video signal source for receiving video signals corresponding to position sequential video signal lines, the video signal processing circuit comprising a vertical video signal filter circuit having a output for furnishing a vertically filtered video signal.

A video signal processing circuit of the type described above is known from Radio Mentor Elektronik, No. 5, 1975, p. 196. In this video signal processing circuit, the vertical video signal filter circuit doubles the line number of the video signal. In the case of still pictures, lines from a previous field which are located between original lines of a present field are inserted between these original lines. In the case of moving pictures, vertically interpolated lines from the present field which are received from an adder serving as a interpolation circuit, are inserted between the original lines of the present field.

It is an object of the invention to provide a video signal processing circuit resulting in a better picture with fewer disturbing phenomena, which circuit can also be used for many other video signal operations. To this end, the invention provides a video signal processing circuit as defined in the main claim. Advantageous embodiments are defined in the subclaims.

As a result of the insertion of the contour direction correction circuit before the vertical video signal filter circuit, the vertical video signal filter circuit receives video signal samples forming picture elements which, depending on the direction of a contour, are on top of each other in a direction corresponding to the direction of the contour. Consequently, the input samples of the vertical video signal filter belong to the same object rather than to different objects in the picture, so that a better picture having fewer disturbing phenomena is obtained.

It should be noted that US-A-4,213,150 describes an edge processing circuit which operates to identify pictorial edges in two-dimensional video data, to expand the dynamic range of pre-selected grey levels, and to process video data by means of two-dimensional low- and high-pass filters; all for the purpose of generating video displays wherein selected types of pictorial features are processed and emphasized. A convolution of four inter-related 3x3 directional masks with two-dimensional video data is carried out to calculate gradients in each of 8 quantized directions. The gradient data is used to identify and describe pictorial edges. The pictorial edges are identified and processed by the application of edge connectivity logic. The edge data, together with data from a two-dimensional filter and an adaptive threshold are used to enhance the input video data so as to select and display prominently certain of the pictorial features.

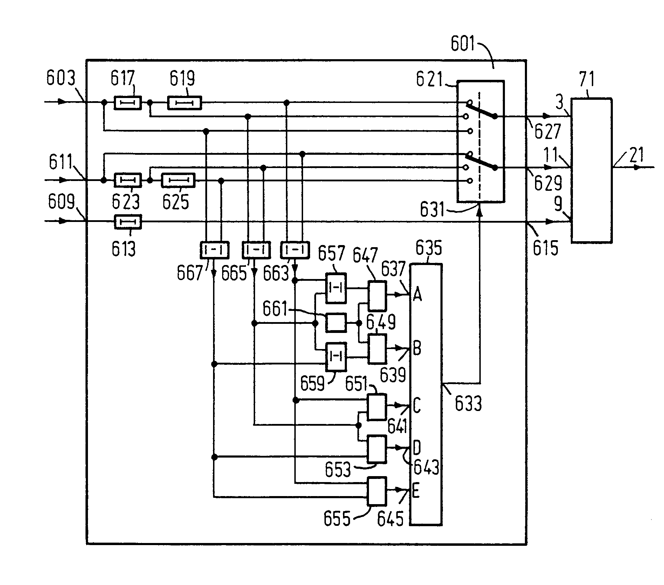

While the present invention and US-A-4,213,150 have in common that edge directions are determined, there is nothing in US-A-4,213,150 that shows or suggests that the operation of an existing vertical video signal filter used for, for example, still-picture creation, line number doubling or halving, field number doubling, noise suppression, vertical contour correction, movement detection, etc. (see Figs. 1 through 20 of the parent patent EP-B-0,192,292) can be improved by applying to the vertical video signal filter, picture elements arranged along the direction of a contour rather than strictly vertically aligned picture elements when a contour is present in the picture.

The invention will now be described by way of non-limiting example with reference to the drawing, the sole figure of which illustrates with a block diagram a video signal processing circuit according to the invention, including a direction correction circuit preceding the input circuit of a non-linear filter circuit.

In the figure a non-linear filter circuit 71 is preceded by a direction correction circuit 601.

Three inputs 603, 609, 611 of this correction circuit receive video signals which correspond to three vertically in-line picture elements of three position-sequential lines from two consecutive interlaced fields of a picture to be displayed. The video signal corresponding to the central picture element is, for example, applied to the input 609 and via a delay circuit 613 producing a time delay corresponding, for example, to the duration of a picture element and an output 615 of the direction correction circuit 601 to an input 9 of the non-linear circuit 71.

The input 603 of the direction correction circuit 601 is connected to a series arrangement of two delay circuits 617, 619, each producing the same time delay as the delay circuit 613, and to the lowest of three inputs of the upper change-over switch of a direction selection circuit 621. The upper and central input, respectively of these three inputs is connected to the output of the delay circuit 619 and 617, respectively.

The input 611 of the direction correction circuit 601 is connected to a series arrangement of two delay circuits 623, 625 which each also produce the same time delay as the delay circuit 613, and to the highest input of the three inputs of the lower change-over switch of the direction selection circuit 621. The lowest and central input, respectively of these three inputs are connected to the output of the respective delay circuits 625 and 623.

The outputs of the highest and lowest change-over switch, respectively of the direction selection switch 621 is connected to an input 3 and 11, respectively of the non-linear filter circuit via an output 627 and 629 respectively of the direction correction circuit 601. It will be obvious that the direction selection circuit 621 is an electronic circuit. It is operated by a direction selection signal combination applied to its input combination 631 and received from an output combination 633 of a function generator 635 which is in the form of, for example, a programmable read-only memory (PROM).

The function generator 635 has five inputs 637 and 639, 641, 643, 645 respectively, which are connected to an output of the respective compator circuits 647 and 649, 651, 653, 655. The comparator circuit 647 and 649, respectively compare the signal value produced by an absolute-difference value determining circuit 657 and 659, respectively to a threshold value received from a threshold value generator 66.

Inputs of the absolute-difference value determining circuit 647 and 649, respectively are connected to the outputs of absolute-difference value determining circuits 663, 665. Further inputs of the absolute-difference value determining circuit 657 and 659, respectively are connected to the outputs of absolute-difference value determining circuits 665 and 667, respectively. The output of the absolute-difference value determining circuit 663 is further connected to an input of the comparator circuits 651 and 655, the output of the absolute-difference determining circuit 665 to an input of the comparator circuits 651 and 653 and the output of the absolute-difference value determining circuit 667 to an input of the comparator circuits 653 and 655.

If the upper, the central and the lower position, respectively of the direction selection circuit 621 is denoted I, II and III, respectively and the signals at the respective inputs 637 and 639, 641, 643 and 645 of the function generator 635 are denoted A and B, C, D, E, respectively, then the following Table holds for the positions I and III. In all the other cases the position II is assumed.

| A | B | C | D | E | position 621 |
|---|---|---|---|---|---|
| 0 | 0 | 0 | 0 | 0 | III |
| 0 | 0 | 0 | 0 | 1 | I |
| 0 | 0 | 0 | 1 | 1 | I |
| 0 | 0 | 1 | 0 | 0 | III |
| 0 | 1 | 0 | 0 | 0 | III |
| 0 | 1 | 0 | 0 | 1 | I |
| 0 | 1 | 0 | 1 | 1 | I |
| 0 | 1 | 1 | 0 | 0 | III |
| 1 | 0 | 0 | 0 | 0 | III |
| 1 | 0 | 0 | 0 | 1 | I |
| 1 | 0 | 0 | 1 | 1 | I |
| 1 | 0 | 1 | 0 | 0 | III |

In this situation it is assumed that C and D, E, respectively, have logic one values when the output value of the circuit 663 exceeds the output value of the circuit 665, the output value of circuit 667 exceeds that of the circuit 665 and the output value of the circuit 667 exceeds that of the circuit 663, respectively.

This implies that the non-linear filter circuit 71 receives video-signals from picture elements which, depending on the direction of a contour, are on top of each other in a direction corresponding to the direction of that contour as a result of which an improved noise suppression by the non-linear filter circuit 71 is obtained. An output 21 of the filter circuit 71 supplies a filtered output signal of the video signal processing circuit.

The direction correction circuit can be used in all the cases described in the parent application, but the delay equal to one picture element this correction circuit produces, must be taken account of. With the exception of the delay circuits, all the further circuits connected to the inputs 3, 9 and 11 of the non-linear circuits then remain connected thereto.

If so desired, the direction correction circuit 601 can be extended such that in the signal paths from the inputs 603 and 611 to the direction selection circuit 621 and the function generator 635 video signals corresponding to more picture elements can be used for selecting more contour directions.

## Claims

1. A video signal processing circuit (601, 71) having video signal inputs (603, 609, 611) coupled to a video signal source for receiving video signals corresponding to position sequential video signal lines, the video signal processing circuit (601, 71) comprising a vertical video signal filter circuit (71) having an output (21) for furnishing a vertically filtered video signal,
characterized in that the video signal processing circuit (601, 71) further comprises a contour direction correction circuit (601) coupled to said video signal inputs (603, 611), for applying to inputs (3, 11) of said vertical video signal filter circuit (71), contour direction corrected video signal samples representing picture elements which, depending on the direction of a contour, are aligned in a direction corresponding to the direction of the contour.

2. A video signal processing circuit (601, 71) as claimed in Claim 1, wherein said contour direction correction circuit (601) comprises:
means (617, 619) coupled to said video signal inputs (603, 609, 611) for providing a plurality of video signal sample pairs (input pairs of 663, 665, 667) forming picture element pairs in the neighbourhood and displaced from a given picture element in a plurality of directions;
a direction selection circuit (621) coupled to said video signal sample pairs providing means (617, 619) for providing said contour direction corrected video signal samples to said vertical video signal filter circuit (71); and
direction selection control signal generating means (635-667) coupled to said video signal sample pairs providing means (617, 619) for furnishing a direction selection control signal to a control input (631) of said direction selection circuit (621).

3. A video signal processing circuit (601, 71) as claimed in Claim 1, wherein said direction selection control signal generating means (635-667) comprise:
comparator circuits (663, 665, 667) coupled to said video signal sample pairs providing means (617, 619) for generating a difference signal for each video signal sample pair (input pairs of 663, 665, 667); and
a minimum circuit (635-661) coupled to said comparator circuits (663, 665, 667) for generating said direction selection control signal indicating the video signal sample pair (input pair of 663, 665 or 667) which has the smallest difference signal.

## Patentansprüche

1. Video-Signalverarbeitungsschaltung (601, 71) mit Video-Signaleingängen (603, 609, 611), die mit einer Video-Signalquelle gekoppelt sind zum Empfangen von Video-Signalen, die lagensequentiellen Video-Signalzeilen entsprechen, wobei diese Video-Signalverarbeitungsschaltung (601, 71) eine Vertikal-Video-Signalfilterschaltung (71) aufweist mit einem Ausgang (21) zum Liefern eines vertikal gefilterten Video-Signals, dadurch gekennzeichnet, daß die Video-Signalverarbeitungsschaltung (601, 71) weiterhin eine mit den genannten Video-Signaleingängen (603, 611) gekoppelte Konturrichtungskorrekturschaltung (601) zum zu den Eingängen (3, 11) der genannten Vertikal-Video-Signalfilterschaltung (71) Zuführen konturrichtungskorrigierter Video-Signalabtastwerte, die Bildpunkte repräsentieren, die je nach der Richtung einer Kontur, in einer Richtung entsprechend der Richtung der Kontur ausgerichtet sind.

2. Video-Signalverarbeitungsschaltung (601, 71) nach Anspruch 1, wobei die genannte Konturrichtungskorrekturschaltung (601) die folgenden Elemente aufweist:
Mittel (617, 619), gekoppelt mit den genannten Video-Signaleingängen (603, 609, 611) zum Liefern einer Anzahl Video-Signalabtastwertepaare (Eingangspaare von 663, 665, 667), die Bildelementepaare bilden in der Nähe von und verschoben gegenüber einem bestimmten Bildelement in einer Anzahl Richtungen;
eine Richtungsselektionsschaltung (621), die mit die genannten Video-Signalabtastwertepaare liefernden Mitteln (617, 619) gekoppelt ist zum Liefern der genannten konturrichtungskorrigierten Video-Signalabtastwerte zu der genannten Vertikal-Video-Signalfilterschaltung (71); und
Mittel (635 - 667) zum Erzeugen von Richtungsselektionsregelsignalen, wobei diese Mittel mit den die genannten Video-Signalabtastwertepaare liefernden Mitteln (617, 619) zum Liefern eines Richtungsselektionsregelsignals zu einem Regeleingang (631) der genannten Richtungsselektionsschaltung (621) gekoppelt sind.

3. Video-Signalverarbeitungsschaltung (601, 71) nach Anspruch 1, wobei die die genannten Richtungsselektionsregelsignale erzeugenden Mittel (635 - 667) die nachfolgenden Elemente aufweisen:
Vergleichsschaltungen (663, 665, 667), gekoppelt mit den die genannten Video-Signalabtastwertepaare liefernden Mitteln (617, 619) zum Erzeugen eines Differenzsignals für jedes Video-Signalabtastwertepaar (Eingangspaare von 663, 665, 667); und
eine Minimalschaltung (635 - 661), gekoppelt mit den genannten Vergleichsschaltungen (663, 665, 667) zum Erzeugen des genannten Richtungsselektionsregelsignals, das das Video-Signalabtastwertepaar (Eingangspaar von 663, 665 oder 667) mit dem kleinsten Differenzsignal angibt.

## Revendications

1. Circuit de traitement de signal vidéo (601, 71) comportant des entrées de signaux vidéo (603, 609, 611) couplées à une source de signal vidéo afin de recevoir des signaux vidéo correspondant à des lignes de signaux vidéo séquentielles en position, le circuit de traitement de signal vidéo (601, 71) comprenant un circuit de filtrage de signal vidéo vertical (71) comportant une sortie (21) destinée à fournir un signal vidéo filtré verticalement,
caractérisé en ce que le circuit de traitement de signal vidéo (601, 71) comprend en outre un circuit de correction de direction de contour (601) couplé aux entrées de signaux vidéo (603, 611) pour appliquer aux entrées (3, 11) du circuit de filtrage de signal vidéo vertical (71) des échantillons de signal vidéo corrigés quant à la direction de contour représentant des éléments d'image qui, en fonction de la direction d'un contour, sont alignés dans une direction correspondant à celle du contour.

2. Circuit de traitement de signal vidéo (601, 71) suivant la revendication 1, dans lequel le circuit de correction de direction de contour (601) comprend :
des moyens (617, 619) couplés aux entrées de signaux vidéo (603, 609, 611) pour fournir une pluralité de paires d'échantillons de signaux vidéo (paires d'entrées de 663, 665, 667) formant des paires d'éléments d'image situées au voisinage et décalées d'un élément d'image donné dans une pluralité de directions;
un circuit de sélection de direction (621) couplé aux moyens (617, 619) fournissant des paires d'échantillons de signaux vidéo pour appliquer les échantillons de signaux vidéo corrigés quant à la direction de contour au circuit de filtrage de signal vidéo vertical (71); et
des moyens générateurs de signaux de commande de sélection de direction (635-667) couplés aux moyens (617, 619) fournissant des paires d'échantillons de signaux vidéo pour fournir un signal de commande de sélection de direction à une entrée de commande (631) du circuit de sélection de direction (621).

3. Circuit de traitement de signal vidéo (601, 71) suivant la revendication 2, dans lequel les moyens générateurs de signaux de commande de sélection de direction (635-667) comprennent :
des circuits comparateurs (663, 665, 667) couplés aux moyens (617, 619) fournissant des paires d'échantillons de signaux vidéo pour produire un signal de différence pour chaque paire d'échantillons de signaux vidéo (paires d'entrées de 663, 665, 667); et
un circuit à minimum (635-661) couplé aux circuits comparateurs (663, 665, 667) pour engendrer le signal de commande de sélection de direction indiquant la paire d'échantillons de signaux vidéo (paire d'entrées de 663, 665 ou 667) qui présente le plus petit signal de différence.
